# FASCICULE DE BREVET EUROPEEN

(11) **EP 4 344 995 B1**
(45) Date de publication et mention de la délivrance du brevet: **04.06.2025**
(21) Numéro de dépôt: 23191037.3
(22) Date de dépôt: 11.08.2023
(51) Int. Cl.: B64C 1/14, B64D 33/04, F01D 25/32, F01D 25/30, B64D 29/06, B64D 45/00, F02C 7/25

(54) **AERONEF MUNI D'UN MOTEUR ET D'UN CONDUIT D'ÉCHAPPEMENT DRAINE AUTOUR D'UNE TUYÈRE D'ÉJECTION DU MOTEUR**
LUFTFAHRZEUG, DAS MIT EINEM MOTOR UND EINEM ABGASKANAL AUSGESTATTET IST, UM WELCHEN EIN ABLAUF ANGEORDNET IST
AIRCRAFT PROVIDED WITH AN ENGINE AND A DRAIN CONDUIT WHICH IS ARRANGED AROUND AN EXHAUST DUCT OF THE ENGINE

(30) Priorité: 27.09.2022 FR 2209784
(43) Date de publication de la demande: 03.04.2024
(73) Titulaire: Airbus Helicopters, 13725 Marignane Cedex (FR)
(72) Inventeur: LEGRAS, Guillaume, 13880 VELAUX (FR); FORT, Patrick, 13005 MARSEILLE (FR)
(74) Mandataire: GPI Brevets

(56) Documents cités:
- US-A- 2 949 736
- US-A- 4 163 366
- US-A- 6 109 562
- US-A1- 2012 023 897

## Description

La présente invention concerne un aéronef muni d'un moteur et d'un conduit d'échappement drainé autour d'une tuyère d'éjection du moteur.

Un aéronef, et par exemple un giravion, peut comprendre un moteur qui expulse des gaz de combustion par une tuyère d'éjection.

Le moteur est usuellement logé dans un compartiment de l'aéronef dénommé « compartiment moteur ». Le compartiment moteur peut être délimité par une ou des parois pare-feu et/ou au moins un capotage.

L'aéronef peut alors comprendre un conduit d'échappement ouvert sur le compartiment moteur et sur un milieu extérieur à l'aéronef. Ce conduit d'échappement entoure localement la tuyère d'éjection. Ce conduit d'échappement peut permettre de mélanger les gaz de combustion issus de la tuyère d'éjection d'un moteur avec de l'air frais provenant du compartiment moteur et/ou de diriger les gaz vers des zones préférentielles.

En cas d'échec du démarrage du moteur, du carburant non brûlé peut être éjecté dans la tuyère d'éjection. En fonction de l'attitude en tangage et/ou en roulis de l'aéronef, ce carburant non brûlé peut alors tomber par gravité dans le conduit d'échappement puis dans le compartiment moteur.

Suite à un démarrage ultérieur, des parois du compartiment moteur peuvent atteindre des températures relativement élevées. La présence de carburant sur ces parois chaudes et d'air dans le compartiment moteur peuvent induire un risque de feu.

Dans ce contexte, un compartiment moteur peut être drainé pour évacuer tout liquide inflammable du compartiment moteur.

Le document EP 3 932 801 A1 décrit un aéronef muni d'un compartiment moteur. Le compartiment moteur est délimité notamment par un plancher mécanique ignifugé ayant une forme d'entonnoir. Cette forme d'entonnoir converge vers au moins un point de collecte interne. Un tel point de collecte peut comprendre un orifice débouchant sur une tuyauterie de drainage.

Le document EP 3798113 A1 est éloigné de l'invention en décrivant un système de propulsion d'avion. Ce système de propulsion comporte une nacelle logeant un moteur et un système de drainage. Le système de drainage comprend une tuyauterie de drainage configurée pour diriger un liquide fuyant d'un composant du moteur vers un réservoir. Une source de liquide sous pression est utilisée pour pressuriser le réservoir et diriger le liquide vers une tuyauterie de sortie.

De même, le document FR 3098242 B1 est éloigné de l'invention en décrivant une turbomachine. La turbomachine comprend un carter d'échappement entre une turbine et une tuyère d'éjection de la turbomachine. Le carter d'échappement est entouré par une nacelle par laquelle la turbomachine est fixée à un aéronef. Le carter d'échappement comprend une couronne interne et une couronne externe liées l'une à l'autre par une pluralité de bras structurels. La couronne externe comprend au moins un orifice d'évacuation de liquide débouchant sur un récupérateur de liquide.

Le document US 2012/023897 A1 est éloigné de l'invention en ayant trait à un moteur muni de drains.

Le document US 2 949 736 A décrit un moteur comprenant une tuyère fixée à une structure conique d'échappement par un joint extensible et un puisard récoltant un fluide fuyant par le joint.

Le document US 4 163 366 A décrit un moteur logé dans une nacelle et un orifice de drainage interne.

Le document US 6 109 562 A est aussi connu.

La présente invention a alors pour objet de proposer un aéronef innovant muni d'un moteur logé dans un compartiment moteur pour éviter le ruissellement de carburant dans le compartiment moteur en cas d'échec du démarrage du moteur.

L'invention vise un aéronef muni d'un compartiment moteur, ledit aéronef comprenant un moteur logé au moins partiellement dans le compartiment moteur, le moteur comprenant une tuyère d'éjection pour au moins éjecter des gaz, ledit aéronef comprenant un conduit d'échappement disposé autour de la tuyère d'éjection, le conduit d'échappement ayant une extrémité ouverte débouchant sur le compartiment moteur.

L'aéronef comporte un dispositif de drainage comprenant un guide pour récolter un liquide coulant le long du conduit d'échappement et s'échappant du conduit d'échappement par ladite extrémité.

Ainsi, le moteur est muni d'une tuyère d'éjection, cette tuyère d'éjection s'étendant en partie dans un conduit d'échappement de l'aéronef. La tuyère d'éjection peut prolonger un bloc moteur du moteur pour évacuer des gaz sortant de ce bloc moteur. Le conduit d'échappement est donc de fait indépendant du moteur et est situé en dehors du moteur. Ce conduit d'échappement n'est donc pas assimilable à une partie interne d'un moteur. Le conduit d'échappement peut être situé en dehors du compartiment moteur, la tuyère d'éjection traversant une paroi délimitant le compartiment moteur pour rejoindre l'espace délimité par le conduit d'échappement. La tuyère d'éjection peut ne pas être en contact avec le conduit d'échappement.

Dès lors, le guide permet de récolter un liquide qui s'écoule éventuellement dans le conduit d'échappement en allant vers le compartiment moteur.

En particulier, en cas d'échec du démarrage du moteur, du carburant non brûlé peut être expulsé dans la tuyère d'éjection et peut tomber dans le conduit d'échappement par gravité. Ce conduit d'échappement est une tuyère secondaire, et n'est pas à confondre avec une nacelle d'un moteur d'avion. Dès lors, en fonction de l'inclinaison de l'aéronef en tangage et/ou en roulis, le carburant non brûlé peut s'écouler vers le compartiment moteur en glissant par gravité le long d'une paroi périphérique du conduit d'échappement.

Dès lors, le guide récolte ce carburant non brulé à sa sortie par l'extrémité du conduit d'échappement. Le carburant est ainsi canalisé avant de ruisseler sur des parois du compartiment moteur, voire est évacué dans une zone prédéterminée. Dès lors, les risques de ruissellement du carburant non brûlé dans le compartiment moteur sont de fait réduits.

Ainsi, au sein d'un aéronef susceptible de conduire du carburant non brûlé dans le compartiment moteur en raison notamment de son inclinaison, l'invention peut limiter les risques de ruissellement non désiré, en particulier suite à un échec de démarrage du moteur par exemple par temps froid.

L'invention s'avère en outre relativement simple et peut être aisément implémentée sur un aéronef existant muni d'un conduit d'échappement autour d'une tuyère d'un moteur.

L'aéronef peut de plus comporter une ou plusieurs des caractéristiques qui suivent.

Selon une possibilité, le guide peut être agencé à la suite de ladite extrémité au regard d'un liquide ruisselant du conduit d'échappement vers le guide, le guide récoltant par gravité le liquide s'échappant du conduit d'échappement par ladite extrémité pour des angles de roulis et de tangage de l'aéronef prédéterminés.

Le liquide, et le cas échéant le carburant coulant le long du conduit d'échappement est ainsi récolté avant de ruisseler sur des parois du compartiment moteur.

Selon une possibilité compatible avec les précédentes, le guide peut être situé dans le compartiment moteur.

Selon une possibilité compatible avec les précédentes, le guide peut avoir une forme distincte d'une forme annulaire. Le guide ne s'étend alors pas à 360 degrés autour d'un axe.

Selon une possibilité compatible avec les précédentes, le guide peut être accolé à l'extrémité ou peut s'étendre en partie sous l'extrémité, voire peut s'étendre en partie sous l'extrémité en étant disposé contre une paroi délimitant le compartiment moteur et portant le conduit d'échappement.

Selon une possibilité compatible avec les précédentes, le guide peut comporter une gouttière délimitant un espace de récolte, ledit espace de récolte étant configuré pour recueillir ledit liquide.

Le terme « gouttière » désigne un réceptacle apte à récolter le liquide s'échappant du conduit d'échappement par son extrémité.

La gouttière récolte par gravité un liquide ruisselant sur le conduit d'échappement, pour l'acheminer vers une zone prédéterminée, en particulier pour des angles d'attitude de l'aéronef prédéterminés.

Eventuellement, la gouttière peut être fixée au conduit d'échappement, par exemple via des moyens de collage, de rivetage, de vissage et/ou via une soudure. Alternativement, la gouttière peut former une pièce monobloc avec le conduit d'échappement.

Alternativement, la gouttière peut être fixée à une paroi délimitant le compartiment moteur, par exemple via des moyens de collage, de rivetage, de vissage et/ou via une soudure.

Selon une possibilité compatible avec les précédentes, le dispositif de drainage peut comporter au moins un orifice d'évacuation, débouchant le cas échéant sur l'espace de récolte, pour évacuer le liquide.

Le guide peut permettre ainsi de récolter le liquide coulant dans le conduit d'échappement en direction du compartiment moteur, puis l'évacue dans une zone prédéterminée non dangereuse via au moins un orifice d'évacuation.

Par exemple, le guide pouvant comprendre une gouttière, l'orifice d'évacuation peut être ménagé sur la gouttière.

La gouttière dirige par gravité un liquide ruisselant sur le conduit d'échappement, vers l'orifice d'évacuation, en particulier pour des angles d'attitude de l'aéronef prédéterminés.

Selon une possibilité compatible avec les précédentes, le dispositif de drainage peut comporter une tuyauterie d'évacuation, par exemple rigide et/ou débouchant sur le guide.

Le terme « tuyauterie » désigne un équipement pouvant comprendre un ou plusieurs tuyaux. Le terme « rigide » signifie que la tuyauterie d'évacuation ne peut être tordue manuellement.

Le liquide peut alors être évacué vers une zone non dangereuse voire en dehors de l'aéronef via au moins la tuyauterie d'évacuation.

Par exemple, le guide pouvant comprendre une gouttière, la tuyauterie d'évacuation peut être fixée à la gouttière, voire peut porter la gouttière.

Le dispositif de drainage peut comprendre des organes de fixation usuels pour immobiliser la tuyauterie de drainage par rapport à une structure de l'aéronef.

Eventuellement, la tuyauterie d'évacuation peut déboucher directement sur une zone non dangereuse voire en dehors de l'aéronef.

Alternativement, l'aéronef pouvant comprendre un système de drainage pour drainer le compartiment moteur, la tuyauterie d'évacuation peut déboucher sur le système de drainage.

Le dispositif de drainage peut ainsi permettre d'évacuer le carburant non brulé présent dans le conduit d'échappement en utilisant le système de drainage du compartiment moteur, mais sans ruissèlement dans le compartiment moteur.

Ainsi, la tuyauterie d'évacuation peut déboucher sur le système de drainage en étant connectée à ce système de drainage existant. Selon un autre exemple, la tuyauterie d'évacuation peut déboucher au dessus d'un orifice d'un tel système de drainage existant pour diriger par gravité le liquide drainé dans le système de drainage.

Outre un aéronef, l'invention vise aussi un procédé de protection contre un risque de feu d'un tel aéronef muni d'un compartiment moteur, ledit aéronef comprenant un moteur logé au moins partiellement dans le compartiment moteur, le moteur comprenant une tuyère d'éjection pour au moins éjecter des gaz, ledit aéronef comprenant un conduit d'échappement disposé autour de la tuyère d'éjection, le conduit d'échappement ayant une extrémité ouverte débouchant sur le compartiment moteur, du carburant étant expulsé par ladite tuyère d'éjection dans le conduit d'échappement.

Ce procédé comporte alors les étapes suivantes : déplacement du carburant le long d'une paroi périphérique du conduit d'échappement vers un guide en passant par ladite extrémité, et récolte avec ledit guide dudit carburant.

Le procédé peut comporter un déplacement du carburant du guide vers un système de drainage du compartiment moteur.

L'invention et ses avantages apparaîtront avec plus de détails dans le cadre de la description qui suit avec des exemples donnés à titre illustratif en référence aux figures annexées qui représentent :
la figure 1, une vue en coupe schématique d'un aéronef selon l'invention avec un dispositif de drainage connecté à un système de drainage,
la figure 2, une vue isométrique schématique d'un guide selon l'invention,
la figure 3, une vue en coupe schématique d'un aéronef selon l'invention avec un dispositif de drainage débouchant sur un orifice d'un système de drainage, et
la figure 4, une vue en coupe schématique d'un aéronef selon l'invention avec un dispositif de drainage débouchant sur une zone prédéterminée.

Les éléments présents dans plusieurs figures distinctes sont affectés d'une seule et même référence.

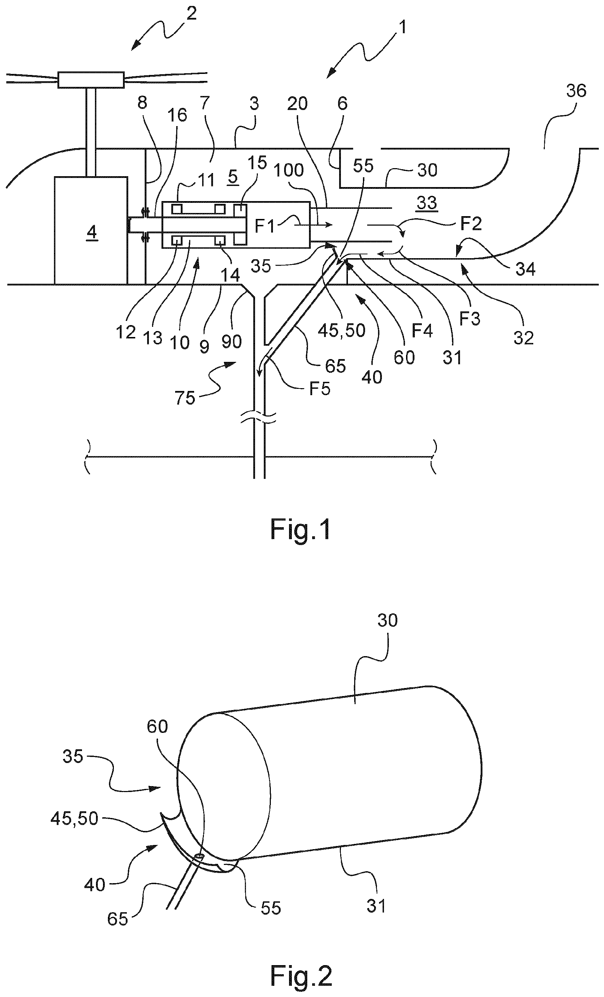

La figure 1 présente un exemple d'aéronef 1 selon l'invention.

Un tel aéronef 1 selon l'invention comprend une cellule 3 dans laquelle se trouve au moins un compartiment moteur 5. Le compartiment moteur 5 est délimité par au moins une paroi 6, 7, 8, et 9. La ou les parois 6, 7, 8 et 9 peuvent être des parois anti-feu, par exemple ignifugées. Par exemple, le compartiment moteur 5 est délimité selon un axe longitudinal par au moins une paroi longitudinale 6, 8. Par exemple, le compartiment moteur 5 est délimité selon un axe transversal par au moins une paroi transversale 7, et verticalement au moins par une paroi de fond 9. Selon l'exemple illustré, l'aéronef 1 comporte une paroi de fond 9 et une paroi transversale 7 qui s'étendent entre deux parois longitudinales 6, 8.

Eventuellement, le compartiment moteur 5 peut comprendre un système de drainage 75 usuel. Ce système de drainage 75 peut comprendre au moins un orifice 90 ménagé dans la paroi de fond 9, au moins une tuyauterie, au moins un plan incliné ménagé dans la paroi de fond 9... Ce système de drainage 75 a pour fonction d'évacuer un liquide vers l'extérieur du compartiment moteur 5.

L'aéronef 1 comprend en outre au moins un moteur 10. Un tel moteur 10 est logé au moins partiellement dans le compartiment moteur 5. Par exemple, le moteur 10 comporte un bloc moteur 11. Ce bloc moteur 11 peut comprendre un arbre de puissance 16, connecté à une chaîne mécanique de transmission de puissance 4, possiblement en traversant une paroi longitudinale 8. Cette chaîne mécanique de transmission de puissance 4 peut mettre en mouvement au moins un rotor et par exemple une voilure tournante 2.

Le moteur 10 peut être un moteur thermique apte à brûler un carburant pour mettre en mouvement l'arbre de puissance 16.

Selon une possibilité, le moteur 10 peut être un turbomoteur. Par exemple, le bloc moteur 11 peut alors comporter un générateur de gaz pourvu d'un ensemble compresseur 12, d'une chambre de combustion 13 et d'un ensemble comprenant au moins une turbine de détente 14 solidaire en rotation de l'ensemble compresseur 12. De plus, le moteur 10 peut comprendre au moins une turbine libre 15 suite à la ou les turbines de détente 14. La ou les turbines libres 15 sont mécaniquement liées à l'arbre de puissance 16.

Alternativement, le moteur 10 peut être un moteur à pistons par exemple.

Indépendamment de la nature du moteur 10, ce moteur 10 comporte une tuyère d'éjection 20 pour au moins éjecter des gaz résultant de la combustion du carburant. La tuyère d'éjection 20 peut prolonger le bloc moteur. Par exemple, la tuyère d'éjection 20 se trouve en aval de la turbine libre 15 selon un sens de circulation des gaz résultant de la combustion de carburant. Par exemple, la tuyère d'éjection 20 traverse une paroi longitudinale 6.

De plus, l'aéronef 1 est pourvu d'un conduit d'échappement 30. Le conduit d'échappement 30 entoure la tuyère d'éjection 20, à savoir toute la tuyère d'éjection 20 ou une partie de la tuyère d'éjection 20. De fait, le conduit d'échappement 30 est indépendant du moteur 10 et est situé en dehors du moteur 10. Tel qu'illustré, le conduit d'échappement 30 peut être situé en dehors du compartiment moteur 5. Par exemple, le conduit d'échappement 30 entoure au moins une partie de la tuyère d'éjection 20 située en dehors du compartiment moteur 5.

Le conduit d'échappement 30 s'étend d'une extrémité 35 ouverte débouchant sur le compartiment moteur 5 jusqu'à une zone extrémale 36 ouverte. Dès lors, de l'air présent dans le compartiment 5 peut être aspiré dans le conduit d'échappement 30. Par exemple, la zone extrémale 36 débouche sur un milieu EXT situé à l'extérieur de l'aéronef 1.

Par ailleurs, le conduit d'échappement 30 peut comprendre une paroi périphérique 31. La paroi périphérique 31 délimite un volume interne 33 situé à l'intérieur du conduit d'échappement 30 et accueillant au moins un tronçon de la tuyère d'éjection 20.

La paroi périphérique 31 s'étend en épaisseur d'une face externe 32 vers une face interne 34, cette face interne 34 étant en regard de la tuyère d'éjection 20.

Le conduit d'échappement 30 peut être une pièce monobloc ou peut comprendre plusieurs éléments fixés les uns aux autres. Ainsi, la paroi périphérique 31 peut être une pièce monobloc ou peut comprendre plusieurs éléments fixés les uns aux autres

L'aéronef 1 comporte par ailleurs un dispositif de drainage 40 qui a pour fonction de drainer un liquide ruisselant dans le conduit d'échappement 30.

Le dispositif de drainage 40 est muni d'un guide 45. Ce guide 45 est configuré pour former une rigole et récolter un liquide 100 coulant le long de la face interne 34 du conduit d'échappement 30 et s'en échappant par l'extrémité 35.

A cet effet, le guide 45 peut être formé à proximité de l'extrémité 35. Le guide 45 peut être agencé à la suite de l'extrémité 35 au regard du liquide 100 sortant du conduit d'échappement par cette extrémité 35. Autrement dit, le liquide 100 sortant de l'extrémité 35 tombe par gravité dans le guide 45. Par exemple, le guide 45 est accolé, éventuellement de manière étanche, à l'extrémité 35 ou s'étend en partie sous l'extrémité 35 en étant par exemple disposé contre une paroi 6 du compartiment moteur 5 portant le conduit d'échappement 30.

Le guide 45 peut alors être agencé dans le compartiment moteur 5.

Le guide 45 a selon l'exemple illustré une forme distincte d'une forme annulaire.

Par exemple, le guide 45 comporte une gouttière 50.

Par suite, la gouttière 50 délimite un espace de récolte 55.

Cet espace de récolte 55 permet alors de recueillir par gravité un liquide 100 ruisselant sur la face interne 34 de la paroi périphérique 31 et s'écoulant par l'extrémité 35, pour des angles de roulis et de tangage prédéterminés de l'aéronef.

La gouttière 50 peut être en appui contre l'extrémité 35 du conduit d'échappement 30, ou sous l'extrémité 35 pour recueillir par gravité le liquide s'échappant du conduit d'échappement par ruissellement par l'extrémité 35.

En particulier, la gouttière 50 peut être fixée au conduit d'échappement 30 ou à une paroi 6 du compartiment moteur 30, ou peut former une pièce monobloc avec ce conduit d'échappement 30 ou cette paroi 6.

La figure 2 présente une gouttière 50.

En référence à la figure 1, le guide 45 peut être pourvu d'au moins un orifice d'évacuation 60 afin d'évacuer le liquide 100 récolté. Un tel orifice d'évacuation 60 peut déboucher sur l'espace de récolte 55 afin qu'un liquide récolté dans l'espace de récolte 55 s'échappe de l'espace de récolte 55 par cet orifice d'évacuation 60.

Ainsi, au moins un orifice d'évacuation 60 peut être ménagé dans la gouttière 50.

Eventuellement, le dispositif de drainage 40 peut être pourvu d'au moins une tuyauterie d'évacuation 65 débouchant sur l'espace de récolte via un orifice d'évacuation 60.

Ainsi, au moins une tuyauterie d'évacuation 65 est fixée à la gouttière 50. La tuyauterie d'évacuation 65 est fixée éventuellement à une structure porteuse de l'aéronef, voire à une paroi du compartiment moteur 5. La tuyauterie d'évacuation 65 peut porter la gouttière 50.

Selon un autre aspect, au moins une tuyauterie d'évacuation 65 peut le cas échéant déboucher sur le système de drainage 75.

Selon l'exemple de la figure 1, la tuyauterie d'évacuation 65 peut alors être connectée hydrauliquement au système de drainage 75. Eventuellement, la tuyauterie d'évacuation 35 peut traverser une paroi du compartiment moteur, par exemple la paroi de fond 9, pour rejoindre une tuyauterie du système de drainage.

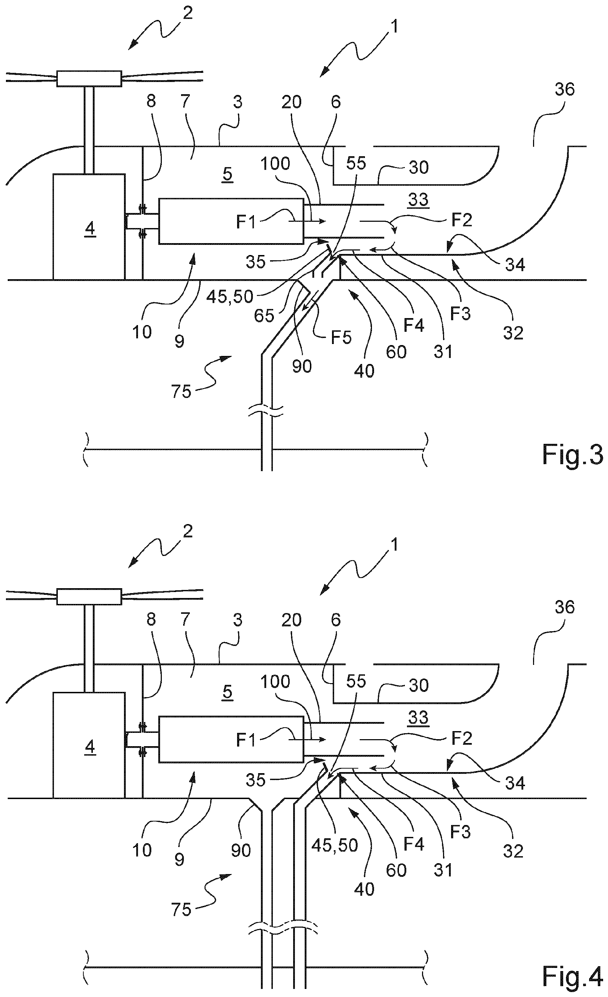

Selon l'exemple de la figure 3, la tuyauterie d'évacuation 65 peut déboucher sur un orifice 90 du système de drainage 75. Par exemple, la tuyauterie d'évacuation 65 débouche au dessus d'un orifice 90 ménagé dans une paroi de fond 9 du compartiment moteur, cet orifice 90 étant relié à une tuyauterie du système de drainage 75.

Selon une autre variante, la tuyauterie d'évacuation 65 peut déboucher sur une zone prédéterminée non risquée sans passer par le système de drainage 75.

Une variante peut éventuellement être privilégiée afin de minimiser la masse totale de l'installation.

Dans ces conditions, le dispositif de drainage 40 peut tendre à réduire les risques de feu dans des conditions particulières.

Le démarrage d'un moteur 5 peut échouer pour de multiples raisons. Dans ce cas de figure, du carburant non brûlé peut être expulsé dans la tuyère d'éjection 20 selon la flèche F1. Ce carburant non brûlé peut ensuite tomber par gravité dans le conduit d'échappement 30 selon la flèche F2.

En fonction de l'angle de tangage et de roulis de l'aéronef 1, ce carburant non brûlé peut être déplacé par gravité en direction du compartiment moteur 5 selon la flèche F3.

Le carburant non brûlé coule en particulier le long de la paroi périphérique 31, et en particulier le long de sa face interne 34.

Dès lors, le guide 45 permet de récolter ce carburant non brûlé selon la flèche F4 avant que le carburant non brûlé ne ruisselle indument sur des parois du compartiment moteur 5. Le cas échéant, le carburant non brûlé est évacué par gravité par la ou les tuyauteries d'évacuation 65 puis selon les variantes des figures 1 et 3 par le système de drainage 75 selon la flèche F5. Les risques d'avoir du carburant non brûlé reposant dans le fond du compartiment moteur 5 sont donc réduits.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Aéronef (1) muni d'un compartiment moteur (5), ledit aéronef (1) comprenant un moteur (10) logé au moins partiellement dans le compartiment moteur (5), le moteur (10) comprenant une tuyère d'éjection (20) pour au moins éjecter des gaz, ledit aéronef (1) comprenant un conduit d'échappement (30) disposé autour de la tuyère d'éjection (20), le conduit d'échappement (30) ayant une extrémité (35) ouverte débouchant sur le compartiment moteur (5),
**caractérisé en ce que** ledit aéronef (1) comporte un dispositif de drainage (40) comprenant un guide (45) pour récolter un liquide (100) coulant le long du conduit d'échappement (30) et s'échappant du conduit d'échappement (30) par ladite extrémité (35), ledit dispositif de drainage (40) comportant au moins un orifice d'évacuation (60) pour évacuer ledit liquide (100).

2. Aéronef selon la revendication 1,
**caractérisé en ce que** ledit guide (45) est agencé à la suite de ladite extrémité (35) au regard dudit liquide (100) ruisselant du conduit d'échappement vers le guide (45), le guide (45) récoltant par gravité le liquide (100) s'échappant du conduit d'échappement (30) par ladite extrémité (35) pour des angles de roulis et de tangage de l'aéronef (1) prédéterminés.

3. Aéronef selon l'une quelconque des revendications 1 à 2,
**caractérisé en ce que** ledit guide (45) est agencé dans le compartiment moteur.

4. Aéronef selon l'une quelconque des revendications 1 à 3,
**caractérisé en ce que** ledit guide (45) comporte une gouttière (50) délimitant un espace de récolte (55), ledit espace de récolte (55) étant configuré pour recueillir ledit liquide (100).

5. Aéronef selon la revendication 4,
**caractérisé en ce que** ladite gouttière (50) est fixée au conduit d'échappement (30) ou forme une pièce monobloc avec le conduit d'échappement (30).

6. Aéronef selon l'une quelconque des revendications 1 à 5,
**caractérisé en ce que** ledit guide (45) comprenant une gouttière (50), ledit orifice d'évacuation (60) est ménagé sur la gouttière (50).

7. Aéronef selon l'une quelconque des revendications 1 à 6,
**caractérisé en ce que** le dispositif de drainage (40) comporte une tuyauterie d'évacuation (65).

8. Aéronef selon la revendication 7,
**caractérisé en ce que** ledit guide (45) comprenant une gouttière (50), ladite tuyauterie d'évacuation (65) est fixée à la gouttière (50).

9. Aéronef selon l'une quelconque des revendications 7 à 8,
**caractérisé en ce que** ledit aéronef (1) comprend un système de drainage (75) pour drainer le compartiment moteur (5), ladite tuyauterie d'évacuation (65) débouchant sur le système de drainage (75).

10. Aéronef selon l'une quelconque des revendications 1 à 9,
**caractérisé en ce que** ledit conduit d'échappement (30) est indépendant du moteur (10) et est situé en dehors du moteur (10).

11. Aéronef selon l'une quelconque des revendications 1 à 10,
**caractérisé en ce que** ledit conduit d'échappement (30) est situé en dehors du compartiment moteur (5), ladite tuyère d'éjection (20) traversant une paroi délimitant le compartiment moteur (5).

12. Aéronef selon l'une quelconque des revendications 1 à 11,
**caractérisé en ce que** ledit moteur (10) comporte un bloc moteur prolongé par ladite tuyère d'éjection (20).

13. Aéronef selon l'une quelconque des revendications 1 à 12,
**caractérisé en ce que** ledit guide (45) a une forme distincte d'une forme annulaire.

14. Aéronef selon l'une quelconque des revendications 1 à 13,
**caractérisé en ce que** ledit guide (45) est accolé à l'extrémité (35) ou s'étend en partie sous l'extrémité (35), ou s'étend en partie sous l'extrémité (35) en étant disposé contre une paroi (6) délimitant le compartiment moteur (5) et portant le conduit d'échappement (30).

15. Procédé de protection contre un risque de feu d'un aéronef (1) muni d'un compartiment moteur (5), ledit aéronef (1) comprenant un moteur (10) logé au moins partiellement dans le compartiment moteur (5), le moteur (10) comprenant une tuyère d'éjection (20) pour au moins éjecter des gaz, ledit aéronef (1) comprenant un conduit d'échappement (30) disposé autour de la tuyère d'éjection (20), le conduit d'échappement (30) ayant une extrémité (35) ouverte débouchant sur le compartiment moteur (5), du carburant étant expulsé par ladite tuyère d'éjection (20) dans le conduit d'échappement (30),
au cours duquel, le procédé comporte les étapes suivantes : déplacement (F3) dudit carburant le long d'une paroi périphérique (31) du conduit d'échappement (30) vers un guide (45) en passant par ladite extrémité (35), et récolte (F4) avec ledit guide dudit carburant (100).

16. Procédé selon la revendication 15,
au cours duquel, le procédé comporte un déplacement dudit carburant (100) du guide vers un système de drainage (75) du compartiment moteur (5).

## Patentansprüche

1. Luftfahrzeug (1) mit einem Triebwerksraum (5), wobei das Luftfahrzeug (1) ein zumindest teilweise im Triebwerksraum (5) untergebrachtes Triebwerk (10) umfasst, und das Triebwerk (10) eine Ausstoßdüse (20) mindestens zum Ausstoßen von Gasen umfasst, wobei das Luftfahrzeug (1) einen um die Ausstoßdüse (20) herum angeordneten Abgaskanal (30) umfasst, und der Abgaskanal (30) ein offenes Ende (35) aufweist, das in den Triebwerksraum (5) mündet,
**dadurch gekennzeichnet, dass** das Luftfahrzeug (1) eine Drainagevorrichtung (40) aufweist, die eine Führung (45) zum Sammeln einer entlang des Abgaskanals (30) fließenden und aus dem Abgaskanal (30) durch das Ende (35) austretenden Flüssigkeit (100) umfasst, wobei die Drainagevorrichtung (40) mindestens eine Abflussöffnung (60) zum Ableiten der Flüssigkeit (100) aufweist.

2. Luftfahrzeug nach Anspruch 1,
**dadurch gekennzeichnet, dass** die Führung (45) in Bezug auf die Flüssigkeit (100), die aus dem Auslasskanal in Richtung der Führung (45) fließt, hinter dem Ende (35) angeordnet ist, wobei die Führung (45) die aus dem Auslasskanal durch das Ende (35) austretende Flüssigkeit (100) unter vorgegebenen Roll- und Nickwinkeln des Luftfahrzeugs (1) durch Schwerkraft auffängt.

3. Luftfahrzeug nach einem der Ansprüche 1 bis 2,
**dadurch gekennzeichnet, dass** die Führung (45) im Triebwerksraum angeordnet ist.

4. Luftfahrzeug nach einem der Ansprüche 1 bis 3,
**dadurch gekennzeichnet, dass** die Führung (45) eine Rinne (50) umfasst, die einen Auffangraum (55) begrenzt, wobei der Auffangraum (55) zum Auffangen der Flüssigkeit (100) ausgebildet ist.

5. Luftfahrzeug nach Anspruch 4,
**dadurch gekennzeichnet, dass** die Rinne (50) an dem Abgaskanal (30) befestigt ist oder einstückig mit dem Abgaskanal (30) ausgebildet ist.

6. Luftfahrzeug nach einem der Ansprüche 1 bis 5,
**dadurch gekennzeichnet, dass** die Führung (45) eine Rinne (50) umfasst und die Abflussöffnung (60) an der Rinne (50) ausgebildet ist.

7. Luftfahrzeug nach einem der Ansprüche 1 bis 6,
**dadurch gekennzeichnet, dass** die Drainagevorrichtung (40) eine Abflussleitung (65) umfasst.

8. Luftfahrzeug nach Anspruch 7,
**dadurch gekennzeichnet, dass** die Führung (45) eine Rinne (50) umfasst und die Abflussleitung (65) an der Rinne (50) befestigt ist.

9. Luftfahrzeug nach einem der Ansprüche 7 bis 8,
**dadurch gekennzeichnet, dass** das Luftfahrzeug (1) ein Drainagesystem (75) zum Drainieren des Triebwerksraums (5) umfasst, und die Abflussleitung (65) in das Drainagesystem (75) mündet.

10. Luftfahrzeug nach einem der Ansprüche 1 bis 9,
**dadurch gekennzeichnet, dass** der Abgaskanal (30) unabhängig vom Triebwerk (10) ist und außerhalb des Triebwerks (10) angeordnet ist.

11. Luftfahrzeug nach einem der Ansprüche 1 bis 10,
**dadurch gekennzeichnet, dass** der Abgaskanal (30) außerhalb des Triebwerksraums (5) angeordnet ist, wobei die Ausstoßdüse (20) eine den Triebwerksraum (5) begrenzende Wand durchdringt.

12. Luftfahrzeug nach einem der Ansprüche 1 bis 11,
**dadurch gekennzeichnet, dass** das Triebwerk (10) einen Triebwerksblock umfasst, der durch die Ausstoßdüse (20) verlängert ist.

13. Luftfahrzeug nach einem der Ansprüche 1 bis 12,
**dadurch gekennzeichnet, dass** die Führung (45) eine von einer Ringform abweichende Form aufweist.

14. Luftfahrzeug nach einem der Ansprüche 1 bis 13,
**dadurch gekennzeichnet, dass** die Führung (45) an das Ende (35) angrenzt oder sich teilweise unter dem Ende (35) erstreckt oder sich teilweise unter dem Ende (35) erstreckt und dabei an einer Wand (6) angeordnet ist, die den Triebwerksraum (5) begrenzt und den Abgaskanal (30) trägt.

15. Verfahren zum Schutz eines mit einem Triebwerksraum (5) versehenen Luftfahrzeugs (1) vor Brandgefahr, wobei das Luftfahrzeug (1) ein zumindest teilweise im Triebwerksraum (5) untergebrachtes Triebwerk (10) umfasst, wobei das Triebwerk (10) eine Ausstoßdüse (20) zumindest zum Ausstoßen von Gasen umfasst, wobei das Luftfahrzeug (1) einen um die Ausstoßdüse (20) herum angeordneten Abgaskanal (30) umfasst, wobei der Abgaskanal (30) ein offenes Ende (35) aufweist, das in den Triebwerksraum (5) mündet, wobei Kraftstoff durch die Ausstoßdüse (20) in den Abgaskanal (30) ausgestoßen wird,
wobei das Verfahren die folgenden Schritte umfasst: Bewegen (F3) des Kraftstoffs entlang einer Umfangswand (31) des Auslasskanals (30) zu einer Führung (45) durch das Ende (35) hindurch und Sammeln (F4) des Kraftstoffs (100) mit der Führung.

16. Verfahren nach Anspruch 15,
wobei das Verfahren ein Bewegen des Kraftstoffs (100) von der Führung zu einem Drainagesystem (75) des Triebwerksraums (5) umfasst.

## Claims

1. Aircraft (1) provided with an engine compartment (5), said aircraft (1) comprising an engine (10) housed at least partially in the engine compartment (5), the engine (10) comprising an exhaust nozzle (20) for at least ejecting gases, said aircraft (1) comprising an exhaust duct (30) arranged around the exhaust nozzle (20), the exhaust duct (30) having an open end (35) leading to the engine compartment (5),
**characterised in that** said aircraft (1) includes a drainage device (40) comprising a guide (45) for collecting a liquid (100) flowing along the exhaust duct (30) and escaping from the exhaust duct (30) via said end (35), said drainage device (40) including at least one discharge orifice (60) for discharging said liquid (100).

2. Aircraft according to Claim 1,
**characterised in that** said guide (45) is arranged following said end (35) with respect to said liquid (100) flowing from the exhaust duct towards the guide (45), the guide (45) using gravity to collect the liquid (100) escaping from the exhaust duct (30) via said end (35) for predetermined roll and pitch angles of the aircraft (1).

3. Aircraft according to either one of Claims 1 or 2,
**characterised in that** said guide (45) is arranged in the engine compartment.

4. Aircraft according to one of Claims 1 to 3,
**characterised in that** said guide (45) includes a channel (50) delimiting a collection space (55), said collection space (55) being configured to collect said liquid (100).

5. Aircraft according to Claim 4,
**characterised in that** said channel (50) is attached to the exhaust duct (30) or forms a single part with the exhaust duct (30).

6. Aircraft according to one of Claims 1 to 5,
**characterised in that** said guide (45) comprising a channel (50), said discharge orifice (60) is formed on the channel (50).

7. Aircraft according to one of Claims 1 to 6,
**characterised in that** the drainage device (40) includes a drain pipe (65).

8. Aircraft according to Claim 7,
**characterised in that** said guide (45) comprising a channel (50), said drain pipe (65) is attached to the channel (50).

9. Aircraft according to either one of Claims 7 or 8,
**characterised in that** said aircraft (1) comprises a drainage system (75) for draining the engine compartment (5), said drain pipe (65) leading to the drainage system (75).

10. Aircraft according to one of Claims 1 to 9,
**characterised in that** said exhaust duct (30) is independent of the engine (10) and is located outside of the engine (10).

11. Aircraft according to one of Claims 1 to 10,
**characterised in that** said exhaust duct (30) is located outside of the engine compartment (5), said exhaust nozzle (20) passing through a wall delimiting the engine compartment (5).

12. Aircraft according to one of Claims 1 to 11,
**characterised in that** said engine (10) includes an engine block extended by said exhaust nozzle (20).

13. Aircraft according to one of Claims 1 to 12,
**characterised in that** said guide (45) has a shape other than a ring.

14. Aircraft according to one of Claims 1 to 13,
**characterised in that** said guide (45) is adjoined to the end (35) or extends partly under the end (35), or extends partly under the end (35) by being arranged against a wall (6) delimiting the engine compartment (5) and supporting the exhaust duct (30).

15. Method for protecting against the risk of fire in an aircraft (1) provided with an engine compartment (5), said aircraft (1) comprising an engine (10) housed at least partially in the engine compartment (5), the engine (10) comprising an exhaust nozzle (20) for at least ejecting gases, said aircraft (1) comprising an exhaust duct (30) arranged around the exhaust nozzle (20), the exhaust duct (30) having an open end (35) leading to the engine compartment (5), fuel being expelled by said exhaust nozzle (20) into the exhaust duct (30),
during which the method includes the following steps: moving (F3) said fuel along a peripheral wall (31) of the exhaust duct (30) towards a guide (45) passing through said end (35), and collecting (F4) with said guide said fuel (100).

16. Method according to Claim 15,
during which, the method includes moving said fuel (100) from the guide towards a drainage system (75) of the engine compartment (5).
